# EUROPEAN PATENT SPECIFICATION

(11) **EP 2 672 151 B1**
(45) Date of publication and mention of the grant of the patent: **10.05.2017**
(21) Application number: 12742580.9
(22) Date of filing: 31.01.2012
(51) Int. Cl.: F16J 9/26, F02F 5/00, F16J 9/06, F16J 9/14, F16J 9/28

(54) **COMBINED PISTON RING**
KOMBINIERTER KOLBENRING
SEGMENT DE PISTON COMBINÉ

(30) Priority: 03.02.2011 JP 2011021674
(43) Date of publication of application: 11.12.2013
(73) Proprietor: Kabushiki Kaisha Riken, Tokyo 102-8202 (JP)
(72) Inventor: OKAZAKI Fumihiro, Kashiwazaki-shi Niigata 945-8555 (JP); SHIBANO Tomoya, Kashiwazaki-shi Niigata 945-8555 (JP); SUGIHARA Hiroyuki, Kashiwazaki-shi Niigata 945-8555 (JP); KOBAYASHI Hiroyuki, Kashiwazaki-shi Niigata 945-8555 (JP)
(74) Representative: Schwabe - Sandmair - Marx
(86) International application number: PCT/JP2012/052098
(87) International publication number: WO 2012/105538

(56) References cited:
- WO-A1-2007/099968
- JP-A- 8 082 370
- JP-A- H1 068 464
- JP-A- 10 068 464
- JP-A- 2004 353 577
- JP-A- 2007 192 242
- JP-A- 2008 155 125
- JP-U- H0 441 153
- US-A- 4 747 602

## Description

### FIELD OF THE INVENTION

The present invention relates to a piston ring for internal engines, particularly to a combined piston ring having excellent gas sealability.

### BACKGROUND OF THE INVENTION

Substantially circular metal piston rings are generally disposed in outer peripheral ring grooves of pistons used in internal engines such as automobile engines, etc., to have gas and oil sealability and ensure thermal conductivity to cylinder bores while the pistons slidingly move back and forth in the cylinder bores. Three piston rings are usually disposed in the ring grooves, and each piston ring is provided with a cut portion (hereinafter referred to as "gap") partially in a circumferential direction to generate an outward tension and ensure expandability when assembled in the piston. To prevent damage and seizure to piston rings and cylinders by the abutment of gaps at the time of low-temperature start and high-temperature operation of engines, the gaps should be wide to a certain extent, so that a burned gas inevitably leaks from the gaps. The leakage of a burned gas reduces the compression ratios of engines, resulting in insufficient work on the pistons.

To reduce the amount of a leaked burned gas (hereinafter referred to as "blowby gas"), a metal piston ring is provided with a special gap usually called "double angle abutment" (Japanese Utility Model Laid-Open No. 59-126158), to reduce an area through which a gas leaks from the gap. However, the double angle abutment has too complicated a structure to form, resulting in increased working cost, the breakage of gap portions, etc.

Japanese Utility Model Laid-Open No. 4-41153 discloses a synthetic-resin-made piston ring having a step-shaped gap. This gap is formed by pushing a thin-blade cutter with relative easiness. Also, oil-sealing rings used in transmissions, etc., are injection-molded seal rings having triple-step gaps (JP 2003-1584 A). Thus, resins are formed into piston rings with gaps having complicated shapes with relative easiness. However, because resin-made piston rings are lower in heat resistance than metal piston rings, they are likely to suffer local deformation and melting particularly on their side surfaces on the combustion chamber side, under influence of a burned gas from a combustion chamber. Therefore, they have not been put into practical use so far.

US 4,747,606 A discloses a sealing ring assembly comprising a synthetic resin sealing ring body having an inner circumferential surface and two opposing stepped cut surface portions each of which includes a planar portion in sliding contact with each other, a synthetic ring gas sealing ring in contact with the inner circumferential surface of the sealing ring body, and a metal ring in contact with the inner circumferential surface of the gas sealing ring.

### OBJECT OF THE INVENTION

An object of the present invention is to provide a piston ring made of a resin capable of industrially forming a special gap effective for reducing blowby, whose side surface on the combustion chamber side is not subject to local deformation and melting by a burned gas from a combustion chamber, particularly a combined piston ring having excellent gas sealability.

### SUMMARY OF THE INVENTION

The combined piston ring of the present invention comprises a piston ring body made of a high-strength, heat-resistant resin and comprises a step-shaped gap, and a spring disposed on the inner peripheral side of said piston ring body for pushing said piston ring body radially outward, a coating covers at least the side surface of said piston ring body on the combustion chamber side, and said high-strength, heat-resistant resin is at least one resin selected from the group consisting of polyetheretherketone, polyphenylene sulfide and polybenzimidazole, and said step-shaped gap has a triple step shape having three steps on upper and lower side surfaces and an outer peripheral surface.

It is important that the piston ring body is basically formed by a high-strength, heat-resistant resin, and that the coating formed on a side surface of the piston ring body on the combustion chamber side should have higher heat resistance than that of the piston ring body, such that it can sufficiently withstand a burned gas. From the aspect of causing the thermal energy of the burned gas to escape not to the piston ring body but to a cylinder, a coating having high thermal conductivity is suitable. Oppositely, from the aspect of avoiding the thermal energy of the burned gas from being conducted to the piston ring body, a coating having low thermal conductivity is suitable.

The high-strength, heat-resistant resin forming the piston ring body may be a so-called superengineering plastic having excellent heat resistance, and it is at least one resin selected from the group consisting of polyetheretherketone (PEEK), polyphenylene sulfide (PPS) and polybenzimidazole (PBI). These high-strength, heat-resistant resins are more preferably reinforced by carbon fibers or glass fibers.

The coating formed on the side surface of the piston ring body on the combustion chamber side may be a general metal coating from the aspect of causing the thermal energy of the burned gas to escape not to the piston ring body but to a cylinder, conveniently an electroless-plated metal, which can be formed on a non-conductive resin. A metal plating of Cu or Ni is particularly preferable, and a wear-resistant composite plating comprising Cu or Ni and at least one selected from the group consisting of P, Co, Cr, Mo, Ti, SiC, Si₃N₄, Al₂O₃, B₄C, diamond, PTFE (polytetrafluoroethylene), BN and graphite is more preferable. A coating comprising diamond-like carbon called "DLC" is preferable for thermal conductivity.

To cause the thermal energy of the burned gas to escape to the cylinder, the coating covering the side surface on the combustion chamber side is preferably in direct contact with the cylinder wall. For this purpose, the outer peripheral surface of the piston ring body is preferably covered with a coating of the same material integrally with the coating on the side surface on the combustion chamber side. Of course, an entire surface of the piston ring is preferably covered with the coating.

From the aspect of avoiding the thermal energy of the burned gas from being conducted to the piston ring body, a heat-resistant coating of superengineering plastics having low thermal conductivity can be used, and particularly a resin coating comprising polybenzimidazole (PBI) and/or polyimide (PI), or a coating comprising organopolysiloxane (P-Si) is preferable.

To ensure the function of the above combined piston ring, a metal piston ring having a smaller width than that of the piston ring body is preferably disposed on the coated side surface of the piston ring body on the combustion chamber side.

### BRIEF DESCRIPTION OF THE DRAWINGS

Fig. 1 is a perspective view showing a gap of the piston ring body of the present invention slantingly from above.
Fig. 2(a) is a view showing the combined piston ring of the present invention received in a piston ring groove, in which a spring for pushing the piston ring body is a leaf spring.
Fig. 2(b) is a view showing the combined piston ring of the present invention received in a piston ring groove, in which a spring for pushing the piston ring body is a coil spring.
Fig. 3 is a view showing the combined piston ring of the present invention received in a piston ring groove, in which a piston ring body is provided with a coating of the same material on a side surface on the combustion chamber side and an outer peripheral surface.
Fig. 4(a) is a view showing the combined piston ring of the present invention comprising a leaf spring for pushing the piston ring body, which is received in a piston ring groove, with a small-width metal piston ring disposed on the side surface of the piston ring body on the combustion chamber side.
Fig. 4(b) is a view showing the combined piston ring of the present invention comprising a coil spring for pushing the piston ring body, which is received in a piston ring groove, with a small-width metal piston ring disposed on the side surface of the piston ring body on the combustion chamber side.

### DESCRIPTION OF THE PREFERRED EMBODIMENTS

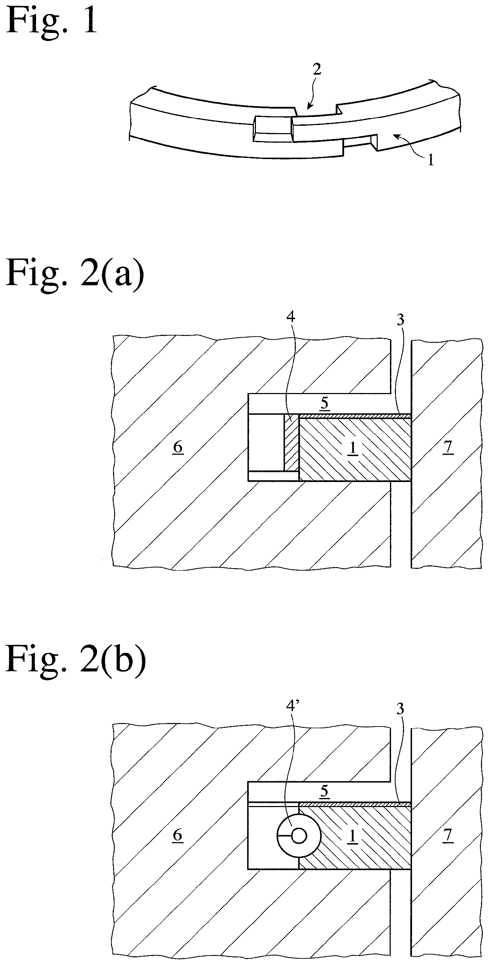

The combined piston ring of the present invention comprises a piston ring body 1 having a step-shaped gap 2 exposed on upper and lower side surfaces and an outer peripheral surface. This gap shape is a so-called triple step shape having three steps on upper and lower side surfaces and an outer peripheral surface as shown in Fig. 1, which can provide geometrically complete sealing. Accordingly, it can extremely reduce the amount of a blowby gas, thereby providing a piston ring with excellent gas sealability. Because it is extremely difficult to form a gap with such a complicated shape in a metal piston ring, a high-strength, heat-resistant resin is used in place of a metal in the present invention. The high-strength, heat-resistant resins preferably include superengineering plastics such as polyetheretherketone (PEEK) and polyphenylene sulfide (PPS), and further polybenzimidazole (PBI) having high heat resistance. These high-strength, heat-resistant resins can be injection-molded, easily forming a gap having a complicated shape. Of course, resin powder can be compression-molded to a ring shape, in which a gap can be formed by a thin-blade cutter.

The above high-strength, heat-resistant resins may contain carbon fibers or glass fibers to increase heat resistance and strength, thereby providing fiber-reinforced, high-strength, heat-resistant resins. The proportions of such carbon fibers or glass fibers added are preferably 10-40% by weight.

Figs. 2(a) and 2(b) show the combined piston ring of the present invention received in a ring groove 5 of a piston 6, which is placed in a bore of a cylinder 7. The combined piston ring of the present invention comprises a piston ring body 1, and a spring 4 (4') for pushing the piston ring body 1 radially outward, a side surface of the piston ring body on the combustion chamber side being provided with a coating 3. Though the spring 4 (4') is a leaf spring 4 in Fig. 2(a), and a coil spring 4' in Fig. 2(b), it is not restricted thereto as long as it has a function of pushing the piston ring body 1 radially outward. An outer peripheral surface 1 of the piston ring body, which comes into sliding contact with a wall of the cylinder 7, may have various shapes such as a straight shape, a barrel-faced shape, a tapered shape, etc., depending on applications. For example, when it is used for a top ring which is first positioned from the side of a combustion chamber, the barrel face is preferable, and when it is used for a second ring which is second positioned from the side of a combustion chamber, the tapered face is preferable.

The coating 3 formed on the side surface of the piston ring body 1 on the combustion chamber side should have higher heat resistance than that of the piston ring body 1, such that it can fully withstand a burned gas, as described above. From the aspect of causing the thermal energy of the burned gas to escape not to the piston ring body 1 but to the cylinder bore, a high-thermal-conductivity coating is suitable. Oppositely, from the aspect of preventing the conduction of the thermal energy of the burned gas to the piston ring body 1, a low-thermal-conductivity coating is suitable. In any case, the coating 3 can be formed by brushing, spraying, dipping, plating, physical vapor deposition, chemical vapor deposition, etc. To form a metal coating having high thermal conductivity, electroless plating is particularly convenient on a resin-made piston ring body. Preferable is a metal plating of Cu or Ni, or a composite plating comprising Cu or Ni and at least one selected from the group consisting of P, Co, Cr, Mo, Ti, SiC, Si₃N₄, Al₂O₃, B₄C, diamond, PTFE (polytetrafluoroethylene), BN and graphite, as described above. The thickness of the electroless plating is preferably 1-50 µm, more preferably 5-30 µm. DLC can be formed by physical or chemical vapor deposition, and a layer having a structure close to diamond with a small hydrogen content can be formed by physical vapor deposition. From the aspect of productivity, the chemical vapor deposition is preferable. The thickness of the DLC coating is preferably 0.1-10 µm, more preferably 2-7 µm.

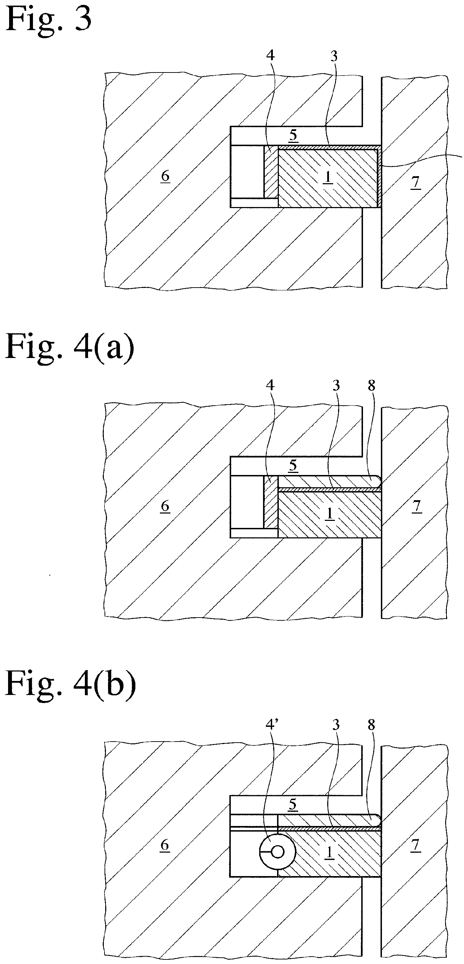

Fig. 3 shows an embodiment in which an outer peripheral surface of the piston ring body 1 has a coating 3' of the same material as that of the coating 3 on a side surface on the combustion chamber side, such that the thermal energy of the burned gas escapes not to a piston ring body 1 but to a cylinder wall 7. As a coating having low thermal conductivity, a coating of polybenzimidazole (PBI), polyimide (PI) or organopolysiloxane (P-Si) is formed by brushing, spraying, dipping, etc. The thickness of the coating 3 is preferably 0.5-50 µm, more preferably 1-30 µm. Though this coating 3 is formed on at least a side surface on the combustion chamber side, it may of course be formed on other surfaces than the outer peripheral surface, taking into consideration productivity, etc. Of course, the outer peripheral surface, which is subject to severe sliding, may be properly provided with a wear-resistant coating, whose material need not be the same as that of the coating 3 on the side surface on the combustion chamber side.

Figs. 4(a) and 4(b) show the combined piston ring of the present invention, which further comprises a metal piston ring 8 thinner in width than the piston ring body on a side surface on the combustion chamber side. The thin metal piston ring 8 extremely reduces a thermal load to the piston ring body 1. Accordingly, this combined piston ring can be suitably used in a particularly severe condition, for example, for a top ring. The thin metal piston ring 8 usable is a piston ring with substantially no tension, which is known as a side rail of a combined oil ring. Fig. 4(a) shows an example using a leaf spring as the spring, which has such width as to push not only the piston ring body but also the thin metal piston ring 8 radially outward, resulting in a double sealing structure on the piston ring periphery capable of extremely reducing the blowby gas. Fig. 4(b) shows an example having only a function of simply heat-shielding the side surface of the piston ring body on the combustion chamber side without pushing the thin metal piston ring 8 radially outward. From the aspect of causing the thermal energy of the burned gas to escape to the cylinder bore, the thin metal piston ring 8 is preferably pushed radially outward, so that it comes into contact with the cylinder wall.

### Example 1 (E1)

Polyetheretherketone (PEEK) powder was blended with carbon fibers in an extruder to form a predetermined amount of pellets, which were then injection-molded to a piston ring having a straight outer periphery and a triple-step-shaped gap under predetermined conditions. A side surface of the piston ring had an arithmetic average surface roughness (Ra) of 0.4 µm. With two piston rings overlapped such that one side surface of each piston ring was exposed to a plating solution with the outer peripheral surface sealed with a tape, 50 piston rings in total suspended from a predetermined jig were subject to Ni-P electroless plating. The thickness of the resultant Ni-P coating was about 20 µm. Thus obtained was a piston ring having a triple-step-shaped gap, which was made of carbon-fiber-reinforced PEEK with one side surface having a Ni-P coating.

### Engine test (1)

The piston ring of Example 1 with a leaf spring set on the inner peripheral side for a tension of about 5 N was assembled in a top ring groove of each piston in a water-cooled, 4-cycle, naturally-aspirated gasoline engine, such that the Ni-P coating was disposed on the combustion chamber side, to measure the amount of blowby. A second ring and an oil ring were those assembled in this engine. The operation was conducted at 4,000 rpm under a wide open throttle (WOT) condition. Assuming that the amount of blowby in Comparative Example 1 below was 100, it was confirmed that the amount of blowby in Example 1 was about 12, reduction to about 1/8.

### Engine test (2)

After the completion of the engine test (1), a durability test was conducted by continuous operation at 5000 rpm for 48 hours with a wide open throttle, with the piston rings of Example 1 kept in the pistons. Observation after the completion of the test revealed that the piston rings were free from damages such as surface roughening, etc. Also, surface roughness measurement at 10 points on the side surface on the combustion chamber side before and after the test revealed that the average surface roughness (Rz) was 3.1 µm and 3.3 µm, respectively.

### Comparative Example 1 (C1)

Using a barrel-faced top ring having a CrN coating on an outer peripheral surface and a straight-shaped gap of 0.25 mm, which was assembled in the above engine in advance, the amount of blowby was measured by the above engine test (1). The result was assumed as 100 as described above. Thus, the amount of blowby observed was about 8 times as large as in Example 1.

### Comparative Example 2 (C2)

Using the same piston ring of carbon-fiber-reinforced PEEK having a triple-step-shaped gap as in Example 1 except that a side surface thereof had no coating, the above engine test (2) was conducted. Observation after the completion of the test revealed that the piston ring surface was peeled and roughened. The Rz of its side surface on the combustion chamber side before and after the test was 2.1 µm and 18.4 µm, respectively.

### Examples 2-3 (E2-E3)

Piston rings of carbon-fiber-reinforced PEEK each having a triple-step-shaped gap were produced in the same manner as in Example 1, except for using electroless plating of Cu and Si₃N₄-dispersed composite electroless plating of Ni-P in place of the Ni-P electroless plating. The types and thicknesses of the coatings of Examples 2-3, their amounts of blowby by the engine test (1) at 4,000 rpm, and their surface roughness Rz and appearances on the side surfaces on the combustion chamber side before and after the engine test (2) are shown in Table 1, together with those of Example 1 and Comparative Example 2. It should be noted that the amount of blowby in each Example was expressed by a relative value to the amount of blowby in Comparative Example 1, which was 100.

### Example 4 (E4)

A piston ring of carbon-fiber-reinforced PEEK having a triple-step-shaped gap was produced in the same manner as in Example 1, except for forming a diamond-like carbon (DLC) coating by plasma CVD using a CH₄ gas as a starting material and an H₂ gas as a carrier gas in place of the Ni-P electroless plating. To form the DLC coating on one side surface of each piston ring, a jig similar to the electroless plating jig in Example 1 was used. The outer peripheral surface of each piston ring was sealed by a heat-resistant tape. As in Examples 2-3, the results of the engine tests (1) and (2) are shown in Table 1.

### Examples 5 and 6 (E5 and E6)

Each of the same Si₃N₄-dispersed Ni-P coating and DLC coating as in Examples 3 and 4 was formed on the side surface and outer peripheral surface of each piston ring of carbon-fiber-reinforced PEEK having a triple-step-shaped gap. Though the electroless plating had substantially the same thickness on both outer peripheral surface and side surface, the DLC coating on the outer peripheral surface was about 1.7 times as thick as that on the side surface. Like Examples 2-4, the results of the engine tests (1) and (2) are shown in Table 1.

### Examples 7 and 8 (E7 and E8)

Each piston ring of carbon-fiber-reinforced PEEK having a triple-step-shaped gap was produced in the same manner as in Example 1, except for forming, in place of the Ni-P electroless plating, a resin coating comprising polybenzimidazole (PBI) or polyamide (PA) as a binder, in which 10% by mass of molybdenum disulfide was dispersed, by a printing method using a stencil mask. Like Examples 2-6, the results of the engine tests (1) and (2) are shown in Table 1.

**Table 1**

| No. | Coating | | | Blowby⁽¹⁾ at 4,000 rpm (%) | Surface Roughness (µm) | | Appearance |
|---|---|---|---|---|---|---|---|
| | Type | Thickness (µm) | | | | | |
| | | Side Surface | Outer Peripheral Surface | | Before Test | After Test | |
| E1 | Ni-P | 19 | No | 12 | 3.1 | 3.3 | Not Roughened |
| E2 | Cu | 24 | No | 13 | 2.6 | 2.9 | Not Roughened |
| E3 | Si₃N₄/Ni-P | 16 | No | 8 | 2.0 | 2.1 | Not Roughened |
| E4 | DLC | 4 | No | 10 | 1.4 | 1.5 | Not Roughened |
| E5 | Si₃N₄/Ni-P | 15 | 15 | 5 | 2.1 | 1.9 | Not Roughened |
| E6 | DLC | 3 | 5 | 6 | 1.2 | 1.3 | Not Roughened |
| E7 | PBI | 11 | No | 8 | 2.5 | 2.8 | Not Roughened |
| E8 | PA | 13 | No | 10 | 2.4 | 2.9 | Not Roughened |
| C2 | No | - | - | - | 2.1 | 18.4 | Roughened |

| | | | | | | | |
|---|---|---|---|---|---|---|---|
| Note: (1) The amount of blowby expressed by a relative value (%). | | | | | | | |

The amount of blowby at 4,000 rpm was 13 or less in any of Examples 1-8 (E1-E8), assuming that it was 100 in Comparative Example 1, indicating drastically reduced blowby as compared with the straight-gap steel ring in Comparative Example 1 (C1). Also, the piston rings each having a Ni-P electroless plating, a Cu electroless plating, an Si₃N₄-dispersed Ni-P electroless plating, a DLC coating, or a resin coating of PBI or PA on the side surface on the combustion chamber side passed the engine tests under relatively severe conditions, without damages and extreme roughening on the surface. When the coating was formed not only on the side surface but also on the outer peripheral surface, the piston ring had further reduced blowby.

### Example 9 (E9)

A piston ring having the same size and shape as in Examples 1-8 (E1-E8) with the same Si₃N₄-dispersed Ni-P coating as in Example 3 formed on the side surface was produced in the same manner as in Example 1, except that it had a triple-step-shaped gap, a barrel-shaped outer peripheral wall and a groove for receiving a coil spring on the inner peripheral wall. The coating was as thick as 15 µm With a coil spring for a tension of about 5 N set on the inner periphery of the piston ring, each piston ring was assembled in the engine to conduct the engine tests (1) and (2) as in Examples 1-8. As a result, it exhibited blowby of 15 relative to the blowby (100) of Comparative Example 1, and surface roughness (Rz) of 2.4 µm and 2.5 µm before and after the test.

### Example 10 (E10)

The carbon fiber-PEEK composite material pellets used in Example 1 were injection-molded to form a piston ring having a triple-step-shaped gap and a barrel-shaped outer peripheral wall, which was 4/5 as wide as the piston ring of Example 1. The same Si₃N₄/Ni-P composite plating as in Example 3 was formed on one side surface of this piston ring. Further, a small-width piston ring made of martensitic stainless steel, which was similar to a side rail in a combined oil control ring and 1/4 as wide as the piston ring body positioned below, was combined with the leaf spring used in Examples 1-8, and assembled in the same engine as in Examples 1-9. The engine tests (1) and (2) conducted in the same manner as in Examples 1-9 revealed that this piston ring had blowby of about 9 relative to the blowby (100) of Comparative Example 1 and surface roughness (Rz) of 2.1 µm and 2.1 µm before and after the test.

### EFFECTS OF THE INVENTION

Because the combined piston ring of the present invention has a triple-step-shaped gap on upper and lower side surfaces and an outer peripheral surface, it has an extremely small gas-leaking area in the gap. In addition, because its piston ring body is formed by an injection-molded, high-strength, heat-resistant resin, it is free from high production cost, breakage in a gap portion, etc. Further, because it has a coating having sufficient heat resistance on a side surface of the piston ring body on the combustion chamber side, the piston ring body is subject to a reduced thermal load by a burned gas, so that it is free from local deformation and melting on the side surface on the combustion chamber side. Thus, the combined piston ring has excellent gas sealability.

## Claims

1. A combined piston ring comprising a piston ring body (1) made of a high-strength, heat-resistant resin and comprising a step-shaped gap (2) and a spring (4, 4') disposed on the inner peripheral side of said piston ring body (1) for pushing said piston ring body (1) radially outward, **characterised in that** a coating (3) covers at least the side surface of said piston ring body (1) on the combustion chamber side, and said high-strength, heat-resistant resin is at least one resin selected from the group consisting of polyetheretherketone, polyphenylene sulfide and polybenzimidazole, and said step-shaped gap (2) has a triple step shape having three steps on upper and lower side surfaces and an outer peripheral surface.

2. The combined piston ring according to claim 1, wherein said high-strength, heat-resistant resin forming said piston ring body (1) is reinforced by carbon fibers or glass fibers.

3. The combined piston ring according to claim 1 or claim 2, wherein said coating (3) is a metal plating of Cu or Ni, or a composite plating comprising Cu or Ni and at least one selected from the group consisting of P, Co, Cr, Mo, Ti, SiC, Si₃N₄, A1₂0₃, B₄C, diamond, PTFE, BN and graphite.

4. The combined piston ring according to any of claims 1 to 3, wherein said coating (3) comprises diamond-like carbon.

5. The combined piston ring according to any of claims 1 to 4, wherein the outer peripheral surface of said piston ring body (1) is covered with a coating (3') of the same material as that of said coating (3).

6. The combined piston ring according to any of claims 1 to 5, wherein said coating (3) comprises at least one selected from the group consisting of polybenzimidazole, polyimide and organopolysiloxane.

7. The combined piston ring according to any of claims 1 to 6, wherein a metal piston ring (8) having a smaller width than that of said piston ring body is disposed on the side surface of said piston ring body on the combustion chamber side.

## Patentansprüche

1. Kombinierter Kolbenring, umfassend einen Kolbenring-Körper (1), der aus einem hochfesten, hitzebeständigen Harz hergestellt ist, und einen stufenförmigen Ausschnitt (2) und eine Feder (4,4') umfaßt, die an der inneren Umfangsseite des Kolbenring-Körpers (1) angeordnet ist, um den Kolbenring-Körper (1) radial nach außen zu drücken, **dadurch gekennzeichnet, daß** eine Beschichtung (3) wenigstens die Seitenfläche des Kolbenring-Körpers (1) auf der Seite der Verbrennungskammer überzieht, und das hochfeste, hitzebeständige Harz wenigstens ein Harz ist, das ausgewählt ist aus der Gruppe, die besteht aus Polyetheretherketon, Polyphenylensulfid und Polybenzimidazol, und der stufenförmige Ausschnitt (2) eine Tripelstufenform aufweist, die drei Stufen an oberen und unteren Seitenflächen und einer äußeren Umfangsfläche aufweist.

2. Kombinierter Kolbenring nach Anspruch 1, worin das hochfeste, hitzebeständige Harz, das den Kolbenring-Körper (1) bildet, durch Carbonfasern oder Glasfasern verstärkt ist.

3. Kombinierter Kolbenring nach Anspruch 1 oder Anspruch 2, worin die Beschichtung (3) eine Metall-Plattierung aus Cu oder Ni ist oder eine Verbund-Plattierung, die Cu oder Ni und wenigstens eine Komponente umfaßt, die ausgewählt ist aus der Gruppe, die besteht aus P, Co, Cr, Mo, Ti, SiC, Si₃N₄, Al₂O₃, B₄C, Diamant, PTFE, BN und Graphit.

4. Kombinierter Kolbenring nach irgendeinem der Ansprüche 1 bis 3, worin die Beschichtung (3) diamantartigen Kohlenstoff umfaßt.

5. Kombinierter Kolbenring nach irgendeinem der Ansprüche 1 bis 4, worin die äußere Umfangsfläche des Kolbenring-Körpers (1) mit einer Beschichtung (3') desselben Materials überzogen ist wie dasjenige der Beschichtung (3).

6. Kombinierter Kolbenring nach irgendeinem der Ansprüche 1 bis 5, worin die Beschichtung (3) wenigstens eine Komponente umfaßt, die ausgewählt ist aus der Gruppe, die besteht aus Polybenzimidazol, Polyimid und Organopolysiloxan.

7. Kombinierter Kolbenring nach irgendeinem der Ansprüche 1 bis 6, worin ein Metall-Kolbenring (8), der eine kleinere Breite als diejenige des Kolbenring-Körpers aufweist, an der Seitenfläche des Kolbenring-Körpers auf der Seite der Verbrennungskammer angeordnet ist.

## Revendications

1. Segment de piston combiné comprenant un corps de segment de piston (1) composé d'une résine de haute résistance et résistante à la chaleur et comprenant un intervalle en forme de gradin (2) et un ressort (4, 4') disposé sur le côté périphérique intérieur dudit corps de segment de piston (1) pour pousser ledit corps de segment de piston (1) radialement vers l'extérieur,
**caractérisé en ce que** un revêtement (2) recouvre au moins la surface latérale dudit corps de segment de piston (1) côté chambre de combustion et ladite résine de haute résistance et résistante à la chaleur est au moins une résine choisie parmi le groupe comprenant le polyétheréthercétone, le polysulfure de phénylène et le polybenzimidazole et ledit intervalle en forme de gradin (2) prend la forme de trois gradins sur des surfaces latérales supérieure et inférieure et une surface périphérique extérieure.

2. Segment de piston combiné selon la revendication 1, où ladite résine de haute résistance et résistante à la chaleur formant ledit corps de segment de piston (1) est renforcée par des fibres de carbone ou des fibres de verre.

3. Segment de piston combiné selon la revendication 1 ou la revendication 2, où ledit revêtement (3) est un revêtement métallique comprenant du Cu ou du Ni et au moins un élément choisi parmi le P, le Co, le Cr, le Mo, le Ti, le SiC, le Si₃N₄, le Al₂O₃, B₄C, le diamant, le PTFE, le BN et le graphite.

4. Segment de piston combiné selon l'une quelconque des revendications 1 à 3, où ledit revêtement (2) comprend du carbone amorphe.

5. Segment de piston combiné selon l'une quelconque des revendications 1 à 4, où la surface périphérique extérieure dudit corps de segment de piston (1) est recouverte d'un revêtement du même matériau que celui dudit revêtement (3).

6. Segment de piston combiné selon l'une quelconque des revendications 1 à 5, où ledit revêtement (3) comprend au moins un élément choisi parmi le groupe comprenant le polybenzimidazole, le polyimide et l'organopolysiloxane.

7. Segment de piston combiné selon l'une quelconque des revendications 1 à 6, où un segment de piston métallique (8) ayant une plus petite largeur que celle dudit corps de segment de piston est disposé sur la surface latérale dudit corps de segment de piston côté chambre de combustion.
